# EUROPEAN PATENT SPECIFICATION

(11) **EP 1 606 967 B1**
(45) Date of publication and mention of the grant of the patent: **04.01.2012**
(21) Application number: 04722306.0
(22) Date of filing: 22.03.2004
(51) Int. Cl.: H04W 64/00

(54) **HANDOVER-BASED METHOD FOR ANONYMOUS OBSERVATION OF A MOVING SUBSCRIBER**
AUF WEITERREICHEN BASIERENDES VERFAHREN ZUR ANONYMEN BEOBACHTUNG EINES BEWEGLICHEN TEILNEHMERS
PROCEDE BASE SUR DES TRANSFERTS INTERCELLULAIRES POUR L'OBSERVATION ANONYME D'UN ABONNE MOBILE

(30) Priority: 24.03.2003 FI 20030427
(43) Date of publication of application: 21.12.2005
(73) Proprietor: Elisa Oyj, 00520 Helsinki (FI)
(72) Inventor: KIVIRANTA, Veli-Matti, FI-02130 Espoo (FI); NYKOPP, Juha, FI-33200 Tampere (FI); KNUUTTILA, Olli, FI-02700 Kauniainen (FI)
(74) Representative: Savela, Antti-Jussi Tapani
(86) International application number: PCT/FI2004/050031
(87) International publication number: WO 2004/086799

(56) References cited:
- WO-A1-00/28768
- US-A- 6 047 183
- US-B1- 6 169 899
- US-B1- 6 295 455

## Description

### Field of the invention

The present invention relates generally to collecting information about moving subscribers by means of a mobile network.

### Background of the invention

US-B1-6 169 899 is referred as a prior art document of the invention. It describes a location method in which moving subscribers are located and their location results are stored in a GMLC (Gateway Mobile Location Centre) of the mobile network. When a previous location of a subscriber is stored in the GMLC and a current location of the subscriber is received, the distance travelled by the subscriber can be calculated. In addition, the speed of the subscriber can be calculated, if the location results are time-stamped. The location method described in US-B1-6 169 899 requires that the subscriber's identifier, such as IMSI (International Mobile Subscriber Identity), is available for localization purposes. The method is not an anonymous location method because it needs subscriber identifiers to locate the subscribers.

In general, it is known to use a mobile network for locating subscribers, but the mobile network can be used in new ways for localization. For example, the applicants prior patent applications F120012139 and F120030086 describe new ways to utilize mobile networks. These two patent applications and the present application share the characteristic in which way certain basic features of the mobile networks are utilized for locating mobile subscribers.

Patent application F120030086 discloses such basic terms of prior art that are relevant also for the invention of the present application, thus we refer to the said patent application as an information source for the basic terms.

The method described in patent application F120030086 comprises the following steps. At first, messages belonging to a certain message set are collected from the areas of a mobile network in which a terminal communicates with the mobile network using messages of the message set. These areas are border areas that are situated between location areas of the mobile network. Depending on a statistical survey, or another analysis to be performed, the border areas may be, for example, such road stages on which velocities of vehicles are measured. In general, the border areas are areas through which mobile subscribers move to the areas interested in a survey, or from which users can move out. The number of different types of users can be calculated by detecting the users movements in the border areas. If required, the velocities of the users can also be calculated. When a message includes a temporary subscriber identifier, it is used for fetching a subscriber identifier from a subscriber database or from the subscriber data stored in a memory. Lastly, initial data is formed using subscriber identifiers. A part of those subscriber identifiers may be from the collected messages and another part may be from the subscriber data. A single subscriber identifier may, be for example, an IMSI that includes the following information: an initial value disclosing a country, an initial value disclosing an operator, and an initial value disclosing a subscriber.

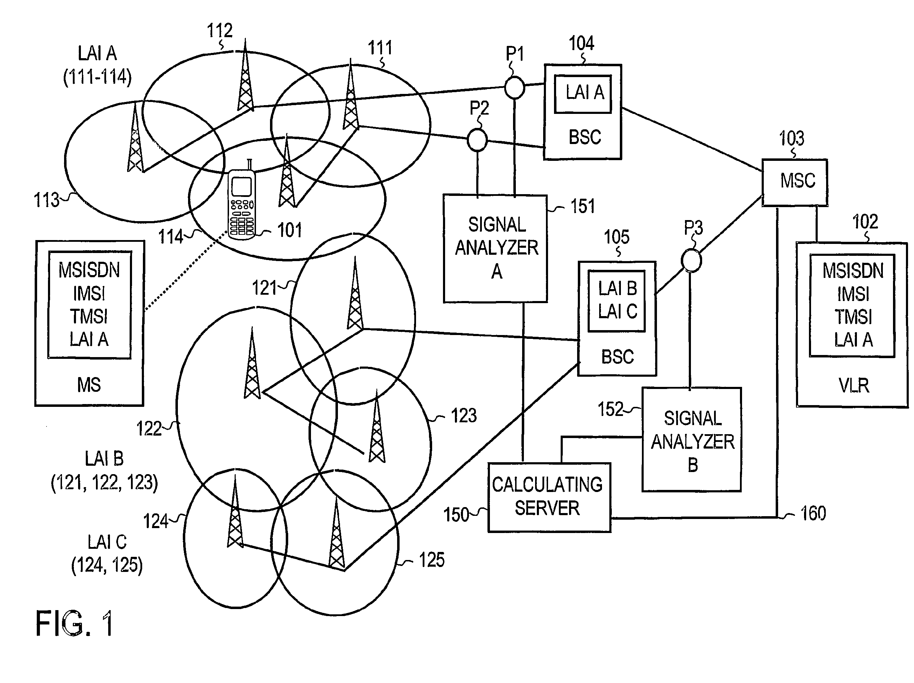

**FIG. 1** shows ways to implement the system described in the patent application F120030086, assuming that the system is constructed within a mobile communication system. In the first embodiment network elements, such as signal analyzers **151,** are added to the mobile communication system. Traffic important for the invention, i.e. the traffic between base stations and base station controllers, is monitored by means of the added network elements. The signal analyzer **151** is preferably connected to the point **P1** in order to monitor signal traffic which is led through a 2Mb E1 cable from a base station to a base station controller. More than one signal line can be assigned to the same base station controller, for example, the point **P2** in Figure **1.** Typically one signal analyzer monitors from eight to sixteen E1 connections, each of which can be connected to twelve transmitter/receiver units, i.e. TRXs, when using the GSM technique. The signal analyzer **151** may include a user interface for specifying necessary information and the messages to be monitored. When the signal analyzer **151** detects a message of a certain type on the basis of an identifier of the message, the signal analyzer collects said message and sends data in accordance with its definitions to the address of the predetermined calculating server **150.** The address of said server may be, for example, an IP or another network address, and/or a port address. If the system is intended for calculating velocities of subscribers, the velocities can be stored in the traffic database **155.**

Network elements, such as the signal analyzer **152**, are used in the second embodiment of the system. They are connected to monitor at the location points **P3** traffic between a base station controller and the exchange **103** or the VLR **102.**

Network elements, such as base stations, base station controllers, exchanges, or a VLR, are changed in the third embodiment. These elements can send certain messages to the server in order to collect information needed for the localization process.

In the fourth embodiment known charging records, such as the CDR (Charging Data Record), are used in a new way. In this embodiment an exchange of a mobile network, e.g. an MSC, is adapted to write a charging record when a terminal is moved into and out of a certain location area. For example, when the terminal **101** detects that the LAI of a new cell differs from the LAI of the cell that had the best audibility a little while ago, the terminal informs the VLR **102** via the MSC **103.** Then the MSC receives a Location Updating Request message sent by the terminal, writes a charging record, and sends the charging record, or at least a part of its data content **160** either directly or via a data storage unit to the calculating server **150.** Depending on the equipment deliverer, the data content **160** may include identifier data, such as an IMSI. Because it is possible to listen to the radio interface, hostile parties may locate users of the mobile network without their knowledge. In order to avoid this, a pseudo identifier, i.e. Temporary Mobile Subscriber Identity (TMSI), is taken into use. The relation between the TMSI and IMSI is stored in the VLR and in the mobile phone.

The above-described embodiments are related to the following drawbacks.

First, borders of location areas are not necessarily situated in the areas where movements of subscribers interested in a statistical survey are happening. This especially concerns the location area defined by a Location Area Identifier (LAI) or a Location Area Code (LAC) identifier (a LAI includes a LAC together with a country identifier or an operator identifier). In the method of the patent application F120030086 observations about users are usually obtained, for example, when a location area (LAC) of a subscriber and a TMSI of the subscriber change.

Secondly, use of TMSI identifiers for locating subscribers cause VLR requests which load the mobile network.

Thirdly, the successful use of the TMSI identifiers requires that, if needed, the IMSI identifiers related to the TMSI identifiers can be fetched from a network of another mobile operator. It is possible that the other mobile operator is not co-operative in this matter, or the fetching of the IMSI identifiers becomes too expensive.

Fourthly, even use of TMSIs for the localization may be problematic because of data privacy and data security.

### Summary of the invention

One of the objectives of the invention is to eliminate the drawbacks of a location system which utilizes a mobile network. A subscriber can be located in a completely anonymous way, without a subscriber identifier or a temporary subscriber identifier. In addition, the areas that are to be located in a statistical survey, or in another analysis, can be selected from a larger set of areas. Instead of LAC areas, it is possible to select cells inside the LAC areas.

One basic idea of the inventive method is to extract/collect at least two messages related to each handover and to determine on the basis of them the locations of subscribers and, if required, their velocities in a certain point of time. Different types of statistics about activities of the subscribers can be calculated by means of these observations describing the activities.

The method comprises the following steps for locating a subscriber. First, the method extracts a first message transmitted in the mobile network, the first message defining a current cell of a certain subscriber of the mobile network. The first message includes a so-called "connective" piece of information on the basis of which a second message transmitted in the mobile network is to be extracted. Then the method extracts the second message that defines a new location cell of the subscriber. Lastly, the method determines/estimates a location of the subscriber on the basis of the cell defined by the first message and the other cell defined by the second message, wherein said location is at least partly situated in a geographical intersection of the cells defined by the first and the second message.

The messages to be extracted are preferably messages that are sent or received by the mobile network. The first message is, for example, a HandOver Command message, and the second message is, for example, one of the following messages: a Channel Activation, a Channel Activation Acknowledgement, or a HandOver Detect message. The piece of information, which connects messages, is usually a time slot of a radio channel. When the second message is a Channel Activation message, a reference number of a handover can be used as the connective piece of information.

The method may further comprise the following steps in order to calculate a velocity of the subscriber. The method attaches a first time stamp to the first message, wherein the time stamp discloses the point of time when the first message was extracted, and the method attaches a second time stamp to the second message, wherein the second time stamp discloses the point of time when the second message was extracted. After that the method determines the velocity of the subscriber on the basis of the first time stamp, the second time stamp, and a "diagonal" of the intersection area of the cells (i.e. the area in which the handover happened). Alternatively, the second message is a Hand Over Command message and the first message is one of the following messages: a Channel Activation, a Channel Activation Acknowledgement, or a HandOver Detect message. In that case the calculation of the velocity of the subscriber differs from the above description so that the length related to the subscribers travel through the cell is taken into account in the calculation.

The method in accordance with the invention is intended for locating anonymously subscribers, said subscribers moving between cells of a mobile network, the method comprising the steps of:
extracting by extracting means a first message transmitted in the mobile network, the first message defining a current cell of a subscriber of the mobile network and the first message including a piece of information on the basis of which a second message transmitted in the mobile network is to be extracted,
extracting by the extracting means the second message which defines a new cell of the subscriber, wherein the first message and the second message are extracted from at least one signalling link between a base station on a base station controller and the mobile network due to at least one handover performed for the subscriber, and
determining by a calculating server a location of said subscriber on the basis of the current cell defined by the first message and the new cell defined by the second message, wherein the location is at least partly situated in a geographical intersection of the cells defined by the first and the second message.

In one embodiment of the invention the system utilizes the above-described method. The system preferably includes signal analysers, by which messages related to handovers are extracted. By examining said messages a single subscriber can be quite reliably observed in the area of interest in a statistical survey, or in another analysis.

In another embodiment of the invention the system monitors messages of air interface, i.e. the messages transmitted between the subscribers/terminals and the mobile network. This system is adapted to:
extract by extracting means a first message transmitted in the mobile network, the first message defining a current cell of a subscriber of the mobile network and the first message including a piece of information on the basis of which a second message transmitted in the mobile network is to be extracted, the extracting means comprise at least one analyzer adapted to send data to a calculation server,
extract by the extracting means the second message which defines a new cell of the subscriber, wherein the first message and the second message are extracted from the air interface and they are sent due to at least one handover performed for the subscriber, and
determine by the calculating server a location of the subscriber on the basis of the current cell defined by the first message and the new cell defined by the second message, wherein the location is at least partly situated in a geographical intersection of the cells defined by the first and the second message.

### Brief description of the drawings

The invention is described more closely with reference to the accompanying drawings, in which
Figure **1** shows operation of a prior art location system,
Figure **2** shows an example of locating a subscriber by means of one message pair,
Figure **3** shows an example of locating a subscriber by means of two message pairs,
Figure **4** shows operation of a system for locating subscribers.

### Detailed description of the invention

The first embodiment of the invention is partly based on the method described in patent application F120030086. This prior method uses a temporary subscriber identifier. Because the temporary subscriber identifier is usually changed at the border of LACs, the location areas known by the prior method are in practice LACs. Conversely, in the present invention the areas to be observed are cells. Another important difference is that in the present invention the extracted messages relate to a handover of a mobile station. In the prior method those messages are not extracted. In the prior method message traffic between border areas of two location areas (LACs) is examined. Conversely, in the present invention the message traffic between border areas of cells is examined.

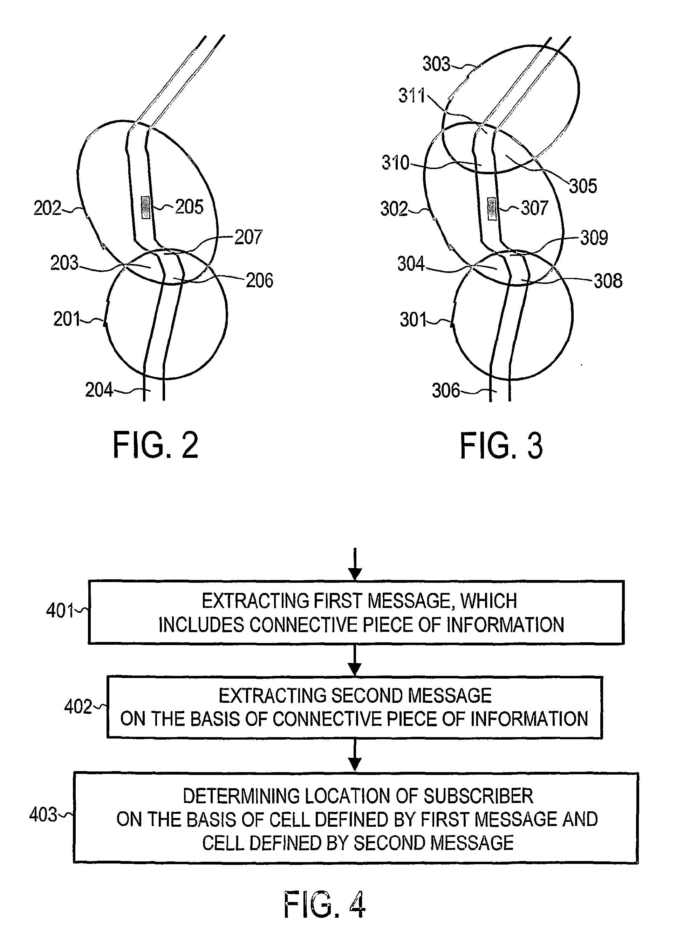

FIG. 2 shows an example of locating a subscriber by means of one message pair related to one handover. In the first embodiment of the present invention the subscriber is located during a single handover. In the figure two cells 201 and 202, a geographical intersection area 203 of the cells, and a vehicle 205 travelling along a road 205 from a cell area 201 towards a cell area 202 can be seen. The first message is obtained from the first border area 206 of the intersection area 203, after which another message is obtained from the second border area 207. We may assume that a subscriber and a mobile station move with the vehicle 205 and the handover of the mobile station occurs as it is travelling. The said first and second message are messages that are related to this handover and which are extracted in the inventive method.

The second embodiment of the present invention differs from the first embodiment, because the locating of a subscriber is based on two message transmissions, each of which is preferably one extracted message. The first message is obtained from the first message transmission and the second message is obtained from the second message transmission.

In addition, the second embodiment of the invention differs from the first embodiment and the method described in patent application F120030086, because the distance travelled by the subscriber extends through the entire cell and this distance is used when calculating the velocity of the subscriber.

FIG. 3 shows an example of locating a subscriber according to the second embodiment, i.e. the locating is based on a message pair so that the messages are obtained from two handovers. Three cells 301, 302 and 303, a geographical intersection area 304 of the cells 301 and 302, and a geographical intersection area 305 of the cells 302 and 303 can be seen in the figure. In addition, a vehicle 307 travelling along a road 306 from the cell area 301 toward the cell area 302 can be seen in the figure, wherein a mobile station is located in the vehicle. The first message is obtained from intersection area 304. The second message is obtained when the vehicle moves ahead to intersection area 305 of the cells. After that another message is obtained from another border area 308. When implementing the location method and system it is possible to choose from which border area 308 or 309 of the intersection area 304 the first message is wanted to be received. It can be also chosen from which border area 310 or 311 of intersection area 305 the second message is wanted to be receive. Let us assume that cell 302 is the cell of interest in a survey. If the location method and system is implemented so that the signaling of only one cell (the one of interest in the survey) must be examined, the first message extracted by the method is the HandOver Detect message received from border area 309 and the second message is the HandOver Command message from border area 310.

The messages used in the location process are sent or received by a mobile network and they are preferably extracted from signaling traffic through the Abis interface. In that case the above-mentioned time slot of the radio channel is deduced from a signaling time slot, which is obtained through an E1-link of the Abis interface from the concerned base station. It is quite simple to implement monitoring of the messages of a base station controller or, in more general, monitoring of mobile network messages. It is also possible that the extracted messages are messages transmitted in an air interface.

FIG. 4 shows the operation of a method for locating subscribers. The method comprises the step of extracting 401 a first message transmitted in the mobile network, the first message defining a current cell of a subscriber of the mobile network. In addition, the first message includes a connective piece of information. On the basis of said connective piece of information, the step of extracting 402 a second message is performed, which defines a new cell/location of the subscriber. Lastly, the step of determining 403 a location of the subscriber is performed on the basis of the cell defined by the first message and the cell defined by the second message. The said location is at least partly situated in a geographical intersection of the cells defined by the first and the second message.

In addition to the location of the subscriber, the steps shown in Figure 4 also result in a piece of information about the direction in which the subscriber is moving. Usually, these pieces of information are adequate for a statistical survey, or for another analysis. If needed, it is possible to calculate a velocity of the subscriber. The embodiments of the invention differ from each other in the velocity calculation.

In the first embodiment of the invention the subscriber is located in the way shown in Figure 2. The distance that the subscriber has travelled, is the distance between border areas 206 and 207, and the travelling time is the time that has lapsed between the messages obtained from these border areas. The message to be first extracted is preferably a HandOver Command message and the message to be secondly extracted is one of the following messages: a Channel Activation message, a Channel Activation Acknowledgement, or a HandOver Detect message. The piece of information that connects the messages is usually a time slot of a radio channel. When the second message is a Channel Activation message, a reference number of the handover can be used as a connective piece of information.

In the second embodiment the subscriber is located in a different way, i.e. in the way shown in Figure 3. A distance, which the subscriber has travelled is the distance between intersection areas 304 and 305. In more detail, the border area 308 or 309 can be chosen as a starting point of the distance and border area 310 or 311 can be chosen as an ending point of the distance. Thus, the messages to be extracted are obtained from these border areas. The time lapsed for the distance is the time interval between the two extracted messages. The first message to be extracted is preferably one of the following messages: a Channel Activation, a Channel Activation Acknowledgement, or a HandOver Detect message. The second message to be extracted is preferably a HandOver Command message.

If the first or second message is a HandOver Command message, it is possible to utilize the method shown in Figure 2 of patent application F120030434, wherein subscriber 'X' can be traced from one cell to another. The need for tracing the subscriber depends on an analysis to be performed.

The location system according to the invention is at least adapted to perform the method steps shown in Figure 4. It is also possible to utilize one or more signal analyzers or a calculating server as shown in Figure 1. However, it is obvious for a person skilled in the art that the system according to the invention can also be constructed in other ways.

## Claims

1. A method for locating anonymously subscribers, said subscribers moving between cells of a mobile network, **characterized by** the steps of
extracting (401) by extracting means a first message transmitted in the mobile network, the first message defining a current cell of a subscriber of the mobile network and the first message including a piece of information on the basis of which a second message transmitted in the mobile network is to be extracted,
extracting (402) by the extracting means the second message which defines a new cell of the subscriber, wherein the first message and the second messages are extracted from at least one signalling link between a base station or a base station controller and the mobile network due to at least one handover performed for the subscriber, and
determining (403) by a calculating server (150) a location of said subscriber on the basis of the current cell defined by the first message and the new cell defined by the second message, wherein the location is at least partly situated in a geographical intersection of the cells defined by the first and the second message.

2. The method as in claim 1, **characterized in that** the first message is a HandOver Command message and the second message is one of the following messages: a Channel Activation, a Channel Activation Acknowledgement, or a HandOver Detect message.

3. The method as in claim 1, **characterized in that** the piece of information is a time slot of a radio channel.

4. The method as in claim 2, **characterized in that** the piece of information is a reference number of a handover when the second message is a Channel Activation message.

5. The method as in claim 2, **characterized in that**
a first time stamp is attached to the first message which discloses a point of time when the first message was extracted,
a second time stamp is attached to the second message which discloses a point of time when the second message was extracted, and on the basis of a location read from a memory and another location,
a distance which the subscriber has travelled is determined and
a velocity of the subscriber is determined on the basis of the distance of, the first time stamp, and the second time stamp, wherein the distance travelled by the subscriber is the distance between two border areas situated in the geographical intersection of the cells defined by the first and the second message.

6. The method as in claim 1, c**haracterized** in that
the second message is a HandOver Command message and the first message is one of the following messages: a Channel Activation, a Channel Activation Acknowledgement, or a HandOver Detect message.

7. The method as in claim 6, **characterized in that**
a time stamp is attached to the location disclosing a point of time when the second message was extracted and
the location of the subscriber, which was first determined, is stored in a memory, and when the current cell of the subscriber is changed to the new cell and the subscriber is moving from the new cell to a subsequent cell,
a third message transmitted in the mobile network is extracted, the third message disclosing the subsequent cell of the subscriber,
another location of the subscriber is determined on the basis of the new cell defined by the second message and the subsequent cell defined by the third message,
the location stored in the memory is read, and on the basis of the read location and the other location,
the distance that the subscriber has travelled across the new cell is determined and
a velocity of the subscriber is determined on the basis of the distance travelled by the subscriber, the time stamp disclosing the point of time when the second message was extracted, and on the basis of another time stamp disclosing the point of time when the third message was extracted.

8. The method as in claim 1, **characterized in that** the extracting means comprises at least one signal analyzer (151, 152) which is adapted to send data the calculation server (150).

9. The method as in claim 1, **characterized in that** said at least one signalling link between the base station/base station controller and the mobile network is an E1 connection.

10. A system for locating anonymously subscribers, said subscribers moving between cells of a mobile network, **characterized in that** the system is adapted to:
extract (401) by extracting means a first message transmitted in the mobile network, the first message defining a current cell of a subscriber of the mobile network and the first message including a piece of information on the basis of which a second message transmitted in the mobile network is to be extracted, the extracting means comprising at least one analyzer adapted to send data to a calculation server,
extract (402) by the extracting means the second message which defines a new cell of the subscriber, wherein the first message and the second message are extracted from air interface and they are sent due to at least one handover performed for the subscriber, and
determine (403) by the calculating server a location of the subscriber on the basis of the current cell defined by the first message and the new cell defined by the second message, wherein the location is at least partly situated in a geographical intersection of the cells defined by the first and the second message.

11. The system as in claim 10, **characterized in that** the first message is a HandOver Command message.

12. The system as in claim 10, **characterized in that** the piece of information is a time slot of a radio channel.

13. The system as in claim 10, **characterized in that** the system is adapted to:
attach to the first message a first time stamp which discloses a point of time when the first message was extracted,
attach to the second message a second time stamp which discloses a point of time when the second message was extracted, and on the basis of a location read from a memory and another location,
determine a distance which the subscriber has travelled, and
determine a velocity of the subscriber on the basis of the distance, the first time stamp, and the second time stamp, wherein the distance travelled by the subscriber is a distance between two border areas situated in the geographical intersection of the cells defined by the first and the second message.

14. The system as in claim 10, **characterized in that** the system is adapted to:
attach to the location of the subscriber a time stamp disclosing a point of time when the second message was extracted,
store the location, which was first determined, in a memory, and in order to prepare for a situation when the subscriber moves from the new cell to a subsequent cell
extract a third message which discloses the subsequent cell of the subscriber,
determine another location of the subscriber on the basis of the new cell defined by the second message and the subsequent cell defined by the third message,
read the location stored in the memory,
determine a distance which the subscriber has travelled across the new cell, the determination of the distance being based on the read location and said other location, and
determine a velocity of the subscriber on the basis of the distance travelled by the subscriber, the time stamp disclosing the point of time when the second message was extracted, and another time stamp disclosing the point of time when the third message was extracted.

## Patentansprüche

1. Verfahren zum anonymen Lokalisieren von Teilnehmern, wobei sich die Teilnehmer zwischen Zellen eines Funknetzes bewegen, **gekennzeichnet durch** die folgenden Schritte:
Extrahieren (401) **durch** Extraktionsmittel einer ersten Nachricht, die im Funknetz übertragen wird, wobei die erste Nachricht eine aktuelle Zelle eines Teilnehmers des Funknetzes definiert, und die erste Nachricht ein Informationselement enthält, auf dessen Basis eine zweite im Funknetz übertragene Nachricht extrahiert werden soll,
Extrahieren (402) **durch** die Extraktionsmittel der zweiten Nachricht, welche eine neue Zelle des Teilnehmers definiert, wobei die erste Nachricht und die zweite Nachricht aus mindestens einer Signalisierungsstrecke zwischen einer Basisstation oder einer Basisstationssteuerung und dem Funknetz infolge mindestens eines Handovers extrahiert werden, der für den Teilnehmer durchgeführt wird, und
Bestimmen (403) **durch** einen Rechenserver (150) eines Aufenthaltsorts des Teilnehmers auf der Basis der aktuellen Zelle, die **durch** die erste Nachricht definiert ist, und der neuen Zelle, die **durch** die zweite Nachricht definiert ist, wobei sich der Aufenthaltsort wenigstens teilweise an einem geografischen Schnittpunkt der Zellen befindet, die **durch** die erste und die zweite Nachricht definiert sind.

2. Verfahren nach Anspruch 1, **dadurch gekennzeichnet, dass** die erste Nachricht eine Handover-Befehlsnachricht ist und die zweite Nachricht eine der folgenden Nachrichten ist: eine Kanalaktivierungs-, eine Kanalaktivierungsbestätigungs- oder eine Handover-Erkennungsnachricht.

3. Verfahren nach Anspruch 1, **dadurch gekennzeichnet, dass** das Informationselement ein Zeitschlitz eines Funkkanals ist.

4. Verfahren nach Anspruch 2, **dadurch gekennzeichnet, dass** das Informationselement eine Bezugsnummer eines Handovers ist, wenn die zweite Nachricht eine Kanalaktivierungsnachricht ist..

5. Verfahren nach Anspruch 2, **dadurch gekennzeichnet, dass**
ein erster Zeitstempel an die erste Nachricht angehängt wird, welcher einen Zeitpunkt offenbart, zu dem die erste Nachricht extrahiert wurde,
ein zweiter Zeitstempel an die zweite Nachricht angehängt wird, welcher einen Zeitpunkt offenbart, zu dem die zweite Nachricht extrahiert wurde, und auf der Basis eines aus einem Speicher ausgelesenen Aufenthaltsorts und eines anderen Aufenthaltsorts
eine Distanz bestimmt wird, welche der Teilnehmer zurückgelegt hat, und
eine Geschwindigkeit des Teilnehmers auf der Basis der Distanz, des ersten Zeitstempels und des zweiten Zeitstempels bestimmt wird, wobei die vom Teilnehmer zurückgelegte Distanz die Distanz zwischen zwei Grenzbereichen am geografischen Schnittpunkt der Zellen ist, die durch die erste und die zweite Nachricht definiert sind.

6. Verfahren nach Anspruch 1, **dadurch gekennzeichnet, dass**
die zweite Nachricht eine Handover-Befehlsnachricht ist und die erste Nachricht eine der folgenden Nachrichten ist: eine Kanalaktivierungs-, eine Kanalaktivierungsbestätigungs- oder eine Handover-Erkennungsnachricht.

7. Verfahren nach Anspruch 6, **dadurch gekennzeichnet, dass**
ein Zeitstempel an den Aufenthaltsort angehängt wird, welcher einen Zeitpunkt offenbart, zu dem die zweite Nachricht extrahiert wurde, und
der Aufenthaltsort des Teilnehmers, welcher zuerst bestimmt wurde, in einem Speicher gespeichert wird und, wenn die aktuelle Zelle des Teilnehmers in die neue Zelle gewechselt wird und der Teilnehmer sich von der neuen Zelle in eine nachfolgende Zelle bewegt,
eine dritte Nachricht extrahiert wird, die im Funknetz übertragen wird, wobei die dritte Nachricht die nachfolgende Zelle des Teilnehmers offenbart,
ein anderer Aufenthaltsort des Teilnehmers auf der Basis der neuen Zelle, die durch die zweite Nachricht definiert ist, und der nachfolgenden Zelle bestimmt wird, die durch die dritte Nachricht definiert ist,
der im Speicher gespeicherte Aufenthaltsort ausgelesen wird und auf der Basis des ausgelesenen Aufenthaltsorts und des anderen Aufenthaltsorts
die Distanz bestimmt wird, die der Teilnehmer durch die neue Zelle zurückgelegt hat, und
eine Geschwindigkeit des Teilnehmers auf der Basis der vom Teilnehmer zurückgelegten Distanz, des Zeitstempels, der den Zeitpunkt offenbart, zu dem die zweite Nachricht extrahiert wurde, und auf der Basis eines anderen Zeitstempels bestimmt wird, der den Zeitpunkt offenbart, zu dem die dritte Nachricht extrahiert wurde.

8. Verfahren nach Anspruch 1, **dadurch gekennzeichnet, dass** das Extraktionsmittel mindestens einen Signalanalysator (151, 152) umfasst, der so ausgelegt ist, dass er Daten an den Rechenserver (150) sendet.

9. Verfahren nach 1, **dadurch gekennzeichnet, dass** die mindestens eine Signalisierungsstrecke zwischen der Basisstation/Basisstationssteuerung und dem Funknetz eine E1-Verbindung ist..

10. System zum anonymen Lokalisieren von Teilnehmern, wobei sich die Teilnehmer zwischen Zellen eines Funknetzes bewegen, **dadurch gekennzeichnet, dass** das System ausgelegt ist zum:
Extrahieren (401) durch Extraktionsmittel einer ersten Nachricht, die im Funknetz übertragen wird, wobei die erste Nachricht eine aktuelle Zelle eines Teilnehmers des Funknetzes definiert, und die erste Nachricht ein Informationselement umfasst, auf dessen Basis eine zweite im Funknetz übertragene Nachricht extrahiert werden soll, wobei die Extraktionsmittel mindestens einen Analysator umfassten, der so ausgelegt ist, dass er Daten an einen Rechenserver sendet,
Extrahieren (402) durch die Extraktionsmittel der zweiten Nachricht, welche eine neue Zelle des Teilnehmers definiert, wobei die erste Nachricht und die zweite Nachricht aus einer Luftschnittstelle extrahiert und infolge mindestens eines Handovers gesendet werden, der für den Teilnehmer durchgeführt wird, und
Bestimmen (403) durch einen Rechenserver eines Aufenthaltsorts des Teilnehmers auf der Basis der aktuellen Zelle, die durch die erste Nachricht definiert ist, und der neuen Zelle, die durch die zweite Nachricht definiert ist, wobei sich der Aufenthaltsort wenigstens teilweise an einem geografischen Schnittpunkt der Zellen befindet, die durch die erste und die zweite Nachricht definiert sind.

11. System nach Anspruch 10, **dadurch gekennzeichnet, dass** die erste Nachricht eine Handover-Befehlsnachricht ist.

12. System nach Anspruch 10, **dadurch gekennzeichnet, dass** das Informationselement ein Zeitschlitz eines Funkkanals ist.

13. System nach Anspruch 10, **dadurch gekennzeichnet, dass** das System ausgelegt ist zum:
Anhängen an die erste Nachricht eines ersten Zeitstempels, welcher einen Zeitpunkt offenbart, zu dem die erste Nachricht extrahiert wurde,
Anhängen an die zweite Nachricht eines zweiten Zeitstempels, welcher einen Zeitpunkt offenbart, zu dem die zweite Nachricht extrahiert wurde, und auf der Basis eines aus einem Speicher ausgelesenen Aufenthaltsorts und eines anderen Aufenthaltsorts
Bestimmen einer Distanz, welche der Teilnehmer zurückgelegt hat,
und
Bestimmen einer Geschwindigkeit des Teilnehmers auf der Basis der Distanz, des ersten Zeitstempels und des zweiten Zeitstempels, wobei die vom Teilnehmer zurückgelegte Distanz eine Distanz zwischen zwei Grenzbereichen am geografischen Schnittpunkt der Zellen ist, die durch die erste und die zweite Nachricht definiert sind.

14. System nach Anspruch 10, **dadurch gekennzeichnet, dass** das System ausgelegt ist zum:
Anhängen an den Aufenthaltsort des Teilnehmers eines Zeitstempels, welcher einen Zeitpunkt offenbart, zu dem die zweite Nachricht extrahiert wurde,
Speichern des Aufenthaltsorts, welcher zuerst bestimmt wurde, in einem Speicher, und zur Vorbereitung auf eine Situation, in welcher der Teilnehmer sich von der neuen Zelle in eine nachfolgende Zelle bewegt,
Extrahieren einer dritten Nachricht, welche die nachfolgende Zelle des Teilnehmers offenbart,
Bestimmen eines anderen Aufenthaltsort des Teilnehmers auf der Basis der neuen Zelle, die durch die zweite Nachricht definiert ist, und der nachfolgenden Zelle, die durch die dritte Nachricht definiert ist,
Auslesen des im Speicher gespeicherten Aufenthaltsorts,
Bestimmen einer Distanz, welche der Teilnehmer durch die neue Zelle zurückgelegt hat, wobei die Bestimmung der Distanz auf dem ausgelesenen Aufenthaltsort und dem anderen Aufenthaltsort basiert, und
Bestimmen einer Geschwindigkeit des Teilnehmers auf der Basis der vom Teilnehmer zurückgelegten Distanz, des Zeitstempels, der den Zeitpunkt offenbart, zu dem die zweite Nachricht extrahiert wurde, und eines anderen Zeitstempels, der den Zeitpunkt offenbart, zu dem die dritte Nachricht extrahiert wurde.

## Revendications

1. Procédé de localisation d'abonnés de manière anonyme, lesdits abonnés se déplaçant entre des cellules d'un réseau mobile, **caractérisé par** les étapes de:
l'extraction (401) par un moyen d'extraction d'un premier message transmis dans le réseau mobile, le premier message définissant une cellule actuelle d'un abonné du réseau mobile et le premier message comprenant une information sur la base de laquelle un deuxième message transmis dans le réseau mobile doit être extrait,
l'extraction (402) par le moyen d'extraction du deuxième message qui définit une nouvelle cellule de l'abonné, dans lequel le premier message et le deuxième message sont extraits d'au moins une liaison de signalisation entre une station de base ou un contrôleur de station de base et le réseau mobile en raison d'au moins un transfert effectué pour l'abonné, et
la détermination (403) par un serveur de calcul (150) d'un emplacement dudit abonné sur la base de la cellule actuelle définie par le premier message et de la nouvelle cellule définie par le deuxième message, dans lequel l'emplacement est au moins partiellement situé à une intersection géographique des cellules définies par le premier message et le deuxième message.

2. Procédé selon la revendication 1, **caractérisé en ce que** le premier message est un message HandOver Command et le deuxième message est l'un des messages suivants : un message Channel Activation, un message Channel Activation Acknowledgement, ou un message HandOver Detect.

3. Procédé selon la revendication 1, **caractérisé en ce que** l'information est un intervalle de temps d'un canal radio.

4. Procédé selon la revendication 2, **caractérisé en ce que** l'information est un numéro de référence d'un transfert lorsque le deuxième message est un message Channel Activation.

5. Procédé selon la revendication 2, **caractérisé en ce que**
un premier horodatage est attaché au premier message pour indiquer le moment auquel le premier message a été extrait,
un deuxième horodatage est attaché au deuxième message pour indiquer le moment auquel le deuxième message a été extrait, et sur la base d'un emplacement lu d'une mémoire et d'un autre emplacement,
une distance parcourue par l'abonné est déterminée, et
une vitesse de l'abonné est déterminée sur la base de la distance, du premier horodatage et du deuxième horodatage, dans lequel la distance parcourue par l'abonné est la distance entre deux zones frontières situées à l'intersection géographique des cellules définies par le premier message et le deuxième message.

6. Procédé selon la revendication 1, **caractérisé en ce que**
le deuxième message est un message HandOver Command et le premier message est l'un des messages suivants : un message Channel Activation, un message Channel Activation Acknowledgement, ou un message HandOver Detect.

7. Procédé selon la revendication 6, **caractérisé en ce que**
un horodatage est attaché à l'emplacement pour indiquer le moment auquel le deuxième message a été extrait, et
l'emplacement de l'abonné, qui a été déterminé en premier, est stocké dans une mémoire, et lorsque la cellule actuelle de l'abonné est changée par la nouvelle cellule et l'abonné se déplace de la nouvelle cellule à une cellule suivante,
un troisième message transmis dans le réseau mobile est extrait, le troisième message indiquant la cellule suivante de l'abonné,
un autre emplacement de l'abonné est déterminé sur la base de la nouvelle cellule définie par le deuxième message et de la cellule suivante définie par le troisième message,
l'emplacement stocké dans la mémoire est lu, et sur la base de l'emplacement lu et de l'autre emplacement,
la distance que l'abonné a parcourue dans la nouvelle cellule est déterminée, et
une vitesse de l'abonné est déterminée sur la base de la distance parcourue par l'abonné, de l'horodatage indiquant le moment auquel le deuxième message a été extrait, et sur la base d'un autre horodatage indiquant le moment auquel le troisième message a été extrait.

8. Procédé selon la revendication 1, **caractérisé en ce que** le moyen d'extraction comprend au moins un analyseur de signal (151, 152) qui est apte à envoyer des données au serveur de calcul (150).

9. Procédé selon la revendication 1, **caractérisé en ce que** ladite au moins une liaison de signalisation entre la station de base/le contrôleur de station de base et le réseau mobile est une liaison E1.

10. Système de localisation d'abonnés de manière anonyme, lesdits abonnés se déplaçant entre des cellules d'un réseau mobile, **caractérisé en ce que** le système est apte à effectuer :
l'extraction (401) par un moyen d'extraction d'un premier message transmis dans le réseau mobile, le premier message définissant une cellule actuelle d'un abonné du réseau mobile et le premier message comprenant une information sur la base de laquelle un deuxième message transmis dans le réseau mobile doit être extrait, le moyen d'extraction comprenant au moins un analyseur apte à envoyer des données à un serveur de calcul,
l'extraction (402) par le moyen d'extraction du deuxième message qui définit une nouvelle cellule de l'abonné, dans lequel le premier message et le deuxième message sont extraits d'une interface hertzienne et sont envoyés en raison d'au moins un transfert effectué pour l'abonné, et
la détermination (403) par le serveur de calcul d'un emplacement de l'abonné sur la base de la cellule actuelle définie par le premier message et de la nouvelle cellule définie par le deuxième message, dans lequel l'emplacement est au moins partiellement situé à une intersection géographique des cellules définies par le premier message et le deuxième message.

11. Système selon la revendication 10, **caractérisé en ce que** le premier message est un message HandOver Command.

12. Système selon la revendication 10, **caractérisé en ce que** l'information est un intervalle de temps d'un canal radio.

13. Système selon la revendication 10, **caractérisé en ce que** le système est apte à effectuer :
l'attachement au premier message d'un premier horodatage qui indique le moment auquel le premier message a été extrait,
l'attachement au deuxième message d'un deuxième horodatage qui indique le moment auquel le deuxième message a été extrait, et sur la base d'un emplacement lu d'une mémoire et d'un autre emplacement,
la détermination d'une distance parcourue par l'abonné, et
la détermination d'une vitesse de l'abonné sur la base de la distance, du premier horodatage et du deuxième horodatage, dans lequel la distance parcourue par l'abonné est une distance entre deux zones frontières situées à l'intersection géographique des cellules définies par le premier message et le deuxième message.

14. Système selon la revendication 10, **caractérisé en ce que** le système est apte à effectuer :
l'attachement à l'emplacement de l'abonné d'un horodatage qui indique le moment auquel le deuxième message a été extrait,
le stockage de l'emplacement, qui a été déterminé en premier, dans une mémoire, et pour se préparer à une situation dans laquelle l'abonné se déplace de la nouvelle cellule à une cellule suivante
l'extraction d'un troisième message qui indique la cellule suivante de l'abonné,
la détermination d'un autre emplacement de l'abonné sur la base de la nouvelle cellule définie par le deuxième message et de la cellule suivante définie par le troisième message,
la lecture de l'emplacement stocké dans la mémoire,
la détermination d'une distance que l'abonné a parcourue dans la nouvelle cellule, la détermination de la distance étant basée sur l'emplacement lu et ledit autre emplacement, et
la détermination d'une vitesse de l'abonné sur la base de la distance parcourue par l'abonné, de l'horodatage indiquant le moment auquel le deuxième message a été extrait, et d'un autre horodatage indiquant le moment auquel le troisième message a été extrait.
